# EUROPEAN PATENT SPECIFICATION

(11) **EP 2 643 624 B1**
(45) Date of publication and mention of the grant of the patent: **19.10.2016**
(21) Application number: 11790753.5
(22) Date of filing: 24.11.2011
(51) Int. Cl.: F16L 13/14, F16L 33/207

(54) **PRESS FITTING**
PRESSPASSUNG
EMMANCHEMENT À LA PRESSE

(30) Priority: 24.11.2010 DE 202010012981 U; 14.03.2011 FR 1100782; 26.05.2011 DE 202011101106 U
(43) Date of publication of application: 02.10.2013
(73) Proprietor: Raccords et Plastiques Nicoll, 49300 Cholet (FR)
(72) Inventor: MAUDET, Michel, F-49280 La Tessoualle (FR)
(74) Representative: Sonnenberg, Fred
(86) International application number: PCT/EP2011/070929
(87) International publication number: WO 2012/069584

(56) References cited:
- EP-A1- 1 596 116
- CA-A1- 2 729 290
- DE-A1-102004 016 327
- DE-U1- 29 920 371
- FR-A1- 2 873 780

## Description

The present invention concerns compression fittings or press fittings, and more particularly a ring for visual indication of compression. The present invention also concerns the use of such press fittings and a compression process.

Compression fittings, also called press fittings, which can connect pipes by compression and deformation using one or two sleeves, are well known in the field of tubing, piping and line system installation, for example, water, gas or heating.

Press fittings are used to connect not only metal but also plastic or composite metal-plastic pipes. They are used to connect appropriately arranged sections of pipe, with their connecting pieces being inserted into the ends of the pipes to be connected, where they are then deformed or crimped or pressed. They are fastened in certain zones, e.g. using press sleeves on the pieces by using so-called system compression tools that usually have interchangeable pressing jaws.

The tube, pipe, or conduit systems are assembled in several steps: first the pipes are inserted into a fitting, and then the fitting is crimped to guarantee good mechanical strength and a leaktight installation. The compression is essentially a pressure on the fitting sleeve - also referred to as a press sleeve - which causes the deformation or shaping of the fitting to the pipe which is inserted into it. The pressure is usually applied to the fitting using a press jaw acting as a compression tool. These press jaws apply radial pressure to the fitting material in order to bring about an interaction with the surface of the pipe(s)/pipe(s) to be connected, thus achieving a reliable connection and a reliable seal.

For different pipe arrangements, press fittings can be designed as curved, angular or T-shaped pieces, with commonly one, two or three connection pieces being provided.

Installation or maintenance of a tubing, piping or conduit system requires the assembly of a plurality of pipes and press fittings. It is critical that each connection in the installation be properly crimped to assure the strength and leak-tightness of the entire system or installation.

Otherwise, there can be serious safety problems, particularly in the case of gas piping systems. When assembling such pipe systems a large number of such press fittings are needed to connect the individual sections of pipe. There is the risk that a press connection might be forgotten in the area of individual connection pieces. When they are installed in buildings under construction, where contamination by dirt frequently exists and the visibility or light conditions are not particularly good, such press fittings are in addition almost impossible to see from outside.

Sometimes it is difficult to be sure that all connections were properly assembled and crimped. This may be due to working conditions (poor light, for example) or due to the repetition of steps during installation which can adversely effect the careful verification of each connection.

Because a fitting and a section of pipe at first appear to be connected thanks to the internally arranged seal that is customarily present, it is sometimes forgotten to provide or carry out the final non-positive and undetachable press connection. Even subsequent pressure tests of the finished pipe system do not always allow the missing press connection to be detected so that, in particular in the case of gas lines, there is a risk that missed press connections are not noticed. This can result in considerable consequential damage.

Such press fittings are widely known and various methods have already been described as to how one might avoid forgetting to make the press connections or to allow the installer to check that the fittings have been correctly crimped. EP 1790896 A1 and DE 20013425 U1 must be particularly mentioned in this regard.

An example of a marking ring or annular element was described in EP 1 790 896, the ring being designed to be destroyed by the pressure applied during the crimping, thus providing a means of visual indication that the crimping was performed properly. However, occasionally segments from the broken ring jam the compression tool and cause the tool to malfunction. Further, both the sliding on of the ring and a possible interaction between the compression tool and the pipe section can result in damage to the pipe section, and there is also in particular a risk that the edge of the press sleeve may be impaired or inadequately pressed.

In document DE 20013425 U1 an indicator ring is shown that is located at a distance from the edge of the compression sleeve. Here again the risk of damage occurring to the immediately adjacent pipe section cannot be excluded, nor can it be guaranteed that the edge will be properly pressed. Document DE 299 20 371 describes a press fitting Document CA 2 729 290 A1 describes a press fitting according to the preamble of claim 1.

An object of the present invention is to provide a press fitting with a better means of visual indication, wherein proper assembly can be clearly recognized, without the risk of damaging the adjacent pipe.

Another object of the present invention is to propose a compression process that indicates to the user that the crimping has been performed properly.

To this effect, the present invention proposes a press fitting that possesses the features of independent claim 1. Preferred embodiments are defined in the dependent claims.

In particular, the invention proposes a press fitting that possesses an annular element that is substantially aligned with the pipe-side edge or open end of the fitting. As a result, it is possible for the first time to assign the annular element several functions in suitable fashion. The function of indicating that pressing has taken place is in itself known, but it is definitely advantageous if the indicator element is positioned at the outermost edge from where it cannot be displaced, because this is the only way in which proper pressing of the edge can be guaranteed.

A further function consists in providing permanent optically monitored guidance of the compression tool, by means of which the edge of the tool can be simply aligned with the edge of the press fitting.

Yet a further function that is thus provided consists in the distribution of force, or in the fact that the annular element is an interposed force-transmitting part. This can be supported by at least local orthoradial deformability, i.e. a deformability oriented substantially perpendicular to the radial as well as to the axial direction. In other words, it is particularly advantageous to design the annular element in such a way that it can adapt to changing peripheral radii. Thus, in a complete departure from what was previously known, the press sleeve at the pipe-side edge is deformed by the multi-function annular element and, as a result, in a surprisingly simple manner, the adjoining pipe section can at the same time be effectively protected from being damaged, because on the one hand the compression tool is visibly guided and thus an interaction can be simply excluded, and on the other hand the annular element remains within the compression tool and interposed with respect to the press or compression sleeve, thus reducing the risk of jamming or blocking. At the same time, the pressing of the edge of the press sleeve can be improved because, for example, even if the compression tool is dirty, the deformation is achieved by a perfectly coaxial surface - e.g. the inner surface sections of the annular segments.

According to a particularly preferred embodiment, a press fitting is provided to join pipes or to connect a pipe, where the press sleeve is provided at the pipe-side edge with an annular element, the latter being provided and intended to interact with a compression tool in order to guide the compression tool and to undergo a change in its appearance after the predetermined action of the compression tool has taken place.

Advantageously, the press fitting, includes a fitting body with a fitting support onto which a pipe end can be inserted, a compression sleeve, which surrounds the fitting support. The press sleeve is configured to be deformed by the crimping pressure to attach the pipe end to the fitting support. Concurrently the annular element is located at the open end of the compression sleeve and is configured to transmit the pressure of the compression tool to the compression sleeve. Therefore, the annular element is provided and is intended to transmit onto the press sleeve the forces that are acting on the annular element in the area of the pipe-side edge while the compression tool is being applied.

The annular element can be configured to transmit the crimping pressure to the crimp sleeve, while serving as a guide during crimping. The annular element can be advantageously provided and intended to guide the compression tool in such a way that the edges of the compression tool and of the press sleeve are in alignment. Alternatively or additionally, the annular element may be or may remain at least partially visible at least during most of the time when the compression tool is being applied.

Advantageously, the annular element is provided and intended to be permanently deformed or broken by the action of the appropriate compression tool. The permanent deformation or fracture guarantees that the annular element can only be used once. In particular, the permanent deformation limit can be set relatively close to the deformation force of the compression sleeve, and it can be particularly advantageous to provide different deformation limit values extending in different directions.

According to a preferred embodiment, the annular element is provided and intended to be permanently deformed or broken in the orthoradial direction by the action of the appropriate compression tool. Advantageously, the annular element contains primarily orthoradially deformable areas that should be in particular evenly distributed.

A particularly preferred deformation of the press sleeve occurs when the annular element is provided and intended, under the action of an appropriate compression tool, to undergo a reduction in the radius of curvature to a radius, and/or it possesses segments having a radius of curvature that is less than the radius of curvature of the press sleeve prior to deformation. It is also possible to provide that the inner surface of at least sections of the annular element substantially corresponds to the radius of curvature of the adjacent pipe section.

Advantageously, the annular element may be tapered on the compression tool side and/or on the pipe side. In this way, it is particularly easy to show a visible permanent deformation, and the tapering on the pipe side can also make it possible to deform the edge precisely along a substantially linear contour.

In order to obtain the maximally uniform and thus sealing deformation, it is preferred that at least half, preferably more than two thirds, and in particular preferably at least 90%, of the inner circumferential surface of the annular element is in contact with the pipe-side edge of the press sleeve prior to deformation.

Advantageously, the annular element should be prevented from moving axially, in order to reduce still further any risk of jamming during deformation.

The invention also provides a new use of such a fitting, as is stated in the claims. The use is new in that the pipe-side end edge is brought into intimate contact with the pipe by applying force and by interposing parts of the annular element functioning as a force-distribution element. Surprisingly, both the leakproofness of the system can be verifiably guaranteed, and on the other hand the risk of injury is minimized because the end zone is virtually pressed into the material of the pipe and thus no projecting burr can be formed, as was previously often encountered.

The use of a press fitting, in particular a press fitting as defined above, provides that a compression tool is guided at the pipe-side edge of the press sleeve and this edge is deformed by the force-transmitting interposition of annular segments acting or at least cooperating to provide said guidance.

Contrary to previous practice, it is thus specifically desired that the annular element should take part in the deformation. In total contrast, the German Utility Model DE 20013425 U1 requires that the indicator rings should not affect or contaminate the system compression tool. In all other previously known devices and uses the aim was also always to avoid deforming the pipe-side edge itself, even if occasionally mention is made of a positioning in the end zone, nor was it ever considered to use for deformation purposes an element that was intended to mark or indicate deformation or proper pressing. Instead, an attempt was always made to provide fracturing or splintering so as to be able to remove the fragments as quickly as possible, or provision was made for displacement in an axial direction in order to move the element out of the engagement zone. Above all, prior to the invention, it was assumed that contact over a large part of the perimeter had to be avoided, in order to guarantee the fracturing in any case, even if the predetermined fracture points are not, as in EP 1790896 A1, located outside the tool.

Preferably, when using the fitting, the annular segments are present joined together in annular fashion before the press sleeve is deformed, and after deformation they lie detached from each other and away from the compression sleeve. Thus, when the compression tool is detached and removed after the crimping, pressing or compressing step has been completed, the annular segments simply fall down out of the tool, whereas, as previously mentioned, during the pressing process itself they remain in the tool where they guide the tool and take part in the deformation.

The invention thus combines for the first time various functions in an annular element arranged at the edge of the press sleeve and advantageously secured against axial displacement, namely an indicator function, an optically monitorable guide function and a force-transmitting function. This can be achieved in a particularly effective way if the orthoradial deformability is larger compared to the radial deformability. It can be particularly advantageous to design the annular element in such a way that the force effect applied results in permanent orthoradial deformation and in elastic and/or permanent deformation of sections in a radial direction.

According to one embodiment, the annular element has a plurality of segments connected to a plurality of connecting sections, the annular element being configured to have a substantial reduction in circumference when crimping pressure is applied, due to ortho-radial deformation of the connecting segments and simultaneous sliding of the segments towards each other.

Preferably, each segment has a guiding zone at its ends, each guiding-zone-forming end being connected to and configured to work with the guiding-zone-forming end of the adjacent segment.

Each guiding-zone-forming end could advantageously substantially match the shape of the guiding-zone-forming end to which it is connected.

According to one embodiment, each guiding-zone-forming end has substantially the same shape as the guiding-zone-forming end to which it is connected such that that two connected ends fit one into the other during crimping.

The connection sections can advantageously be configured to break when a sufficient crimping pressure has been applied.

According to another embodiment, the open end of the press sleeve includes a chamfer to guide the insertion of the pipe end.

The annular element can advantageously be flush with the open end of the crimp sleeve.

According to yet another embodiment, the annular element is slipped over the open end or pipe side edge of the press or compression sleeve, and the ring has a protruding sleeve projecting from the open end of the press sleeve towards the pipe.

Preferably, the lip forms a chamfer to guide the insertion of the pipe end.

The invention also proposes the use of a press fitting such as described, wherein a compression tool is guided at an open end of the sleeve by means of a deformable, breakable ring located at the open end of the crimp sleeve, which is configured to transmit the crimping pressure to the crimp sleeve.

The invention also concerns a crimping process including the application of crimping pressure, by a compression tool, on a deformable breakable annular element at an open end of a press sleeve of a press fitting, the compression tool and/or the annular element segments remaining guided when the annular element breaks due to the crimping pressure while a deforming force is applied across and through the annular element to the sleeve.

Other characteristics and advantages of the invention will be more clearly evident upon reading the description of several currently preferred embodiments, provided as examples only, with reference to the attached drawings, wherein:
- Figure 1 shows a cross-sectional view of a press fitting before assembly and pressing according to a first aspect of the present invention,
- Figure 2 is shows a cross-sectional view corresponding to Fig. 1, but after assembly and pressing according to a first aspect of the present invention,
- Figure 3 shows a ring usable on a press fitting according to a first aspect of the present invention,
- Figure 4 shows a part of a ring alternatively usable on a press fitting according to a first aspect of the present invention,
- Figure 5 shows a part of another ring alternatively usable on a press fitting according to a first aspect of the present invention,
- Figure 6 shows yet another ring alternatively usable on a press fitting according to a first aspect of the present invention,
- Figure 7 is a drawing of a press fitting according to another aspect of the present invention,
- Figure 8 is a drawing of a cross-section of the fitting shown in Figure 7,
- Figure 9 a cross sectional view of a base body configured as a press fitting according to one aspect of the invention,
- Figure 10 shows a crimping process according to one aspect of the invention.

In the figures, identical parts are identified using the same reference numbers.

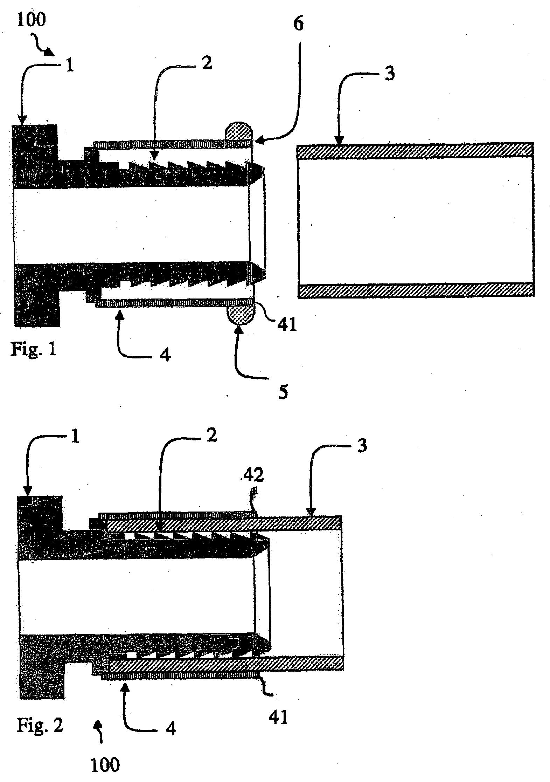

Figure 1 shows a press fitting 100 allowing the connection of a pipe 3 according to one aspect of the present invention; Figure 2 shows the press fitting 100 after crimping. For a better view, the drawing in Figure 2 is simplified, in that deformation from the crimping is not fully shown.

The press fitting 100 includes a fitting body including an inner support 2 with a receiving area and a crimp or press sleeve 4, which define an insertion space into which the end of the pipe 3 can be inserted.

The receiving area 2 extends from one end of the fitting body 1 in a longitudinal direction to the other end of the fitting body and is preferably not continuous - although another configuration is conceivable. At its end opposite a pipe-side edge or open end, the receiving area of the fitting support has a stop that limits the depth of insertion of a pipe 3.

The press sleeve 4 extends substantially around the inner support 2 and can be deformed in an irreversible manner, using pressure, to attach the internal support 2 and the inserted end of the pipe 3. The pressure can be applied by a press acting as a compression tool (not shown).

The press sleeve 4 extends, with a radial spacing, over at least part of the receiving area or fitting support 2 in the longitudinal direction of the fitting body 1. Preferably - although another configuration is also conceivable - both the fitting body 1 and the press sleeve 4 are rotationally symmetrical bodies and are coaxially arranged. The part of the receiving area 2 that is covered by the press sleeve 4 is also regarded as the press sleeve because it is only in this area that the pipe 3 can be connected to the press fitting 1.

At its open pipe-side end 41, also called pipe insertion end 41, the press sleeve 4 has a chamfer 42. The chamfer 42 is configured to guide the pipe 3 when the pipe is inserted into the sleeve 4 and onto the inner support 2 of the press fitting 100.

The chamfer 42 extends substantially around the entire circumference of the pipe insertion end 41, giving the pipe insertion end a form that is substantially flared or "trumpet shaped."

The fitting body 1 has an elongated configuration along a longitudinal axis and can be in one configuration substantially symmetric with respect to its longitudinal axis.

A annular element or ring 5 is inserted in the press sleeve 4 at the pipe insertion end 6, i.e. at the open end or pipe side edge of the compression sleeve. The ring 5 is permanently deformable, in particular breakable during crimping and is configured to visually indicate that the crimping has been performed properly.

The ring 5 is designed as a plastic ring in the present case. It is preferably arranged at the pipe-side edge 6 of the press sleeve 4 in such a way that it is flush with the end face of the pipe-side end of the press sleeve4 and at the same time its inner circumferential surface is in contact with the outer surface of the press sleeve4. In order to form a connection, the pipe 3 that is to be connected is inserted into the press fitting, into the annular cavity between the press sleeve4 and the receiving area of the fitting support 2 and it is pushed as far as the stop at the end of the receiving area 2. The spacing between the press sleeve4 and the receiving area of the fitting support 2 corresponds substantially to the wall thickness of the pipe 3.

Figure 2 shows the press fitting 1 with the pipe 3 inserted between the press sleeve 4 and the fitting support 2, in the pressed or connected state. This can be recognized from the fact that the annular element 5 is missing, because once pressing has been successfully carried out and this annular element 5 is deformed due to the at least partial transmission of the necessary pressing force, it falls off, or can be easily removed. In order to keep the figure as simple as possible, the other induced deformations are not shown here.

A brief outline will now be given of the use according to the invention. After a section of pipe has been cut to length, this pipe 3 is inserted into the annular gap between the press sleeve4 and the fitting support 2, until the stop. In a preferred embodiment, the compression tool is then applied to the annular element 5 in such a way that the outer curvature fits, preferably with minimal play, into a matching receiving part on the compression tool. The goal is that at least part of the force that is needed to press or crimp the pipe 3 with the press fitting should be transmitted via the annular element 5. Thus, the annular element 5 takes part in the pressing process, on the one hand by guiding the compression tool, and on the other hand by taking part at least partially in the crimping and thus the connecting of the pipe 3 with the press fitting. This is accomplished by the ortho-radial deformability of the annular element 5, because during the pressing process the latter is embedded between the pipe 3 and the compression tool and can participate in the cross-sectional reduction caused by the pressing step, and in the process it remains permanently in contact both with the compression tool and with the press fitting. Once the compression tool is opened at the end of the pressing process, the segments of the annular element 5 fall out, preferably by themselves, but they can also be removed without any great difficulty from the corresponding recesses in the compression tool. The absence of the annular element 5 on the press fitting from then on indicates that the latter has been pressed.

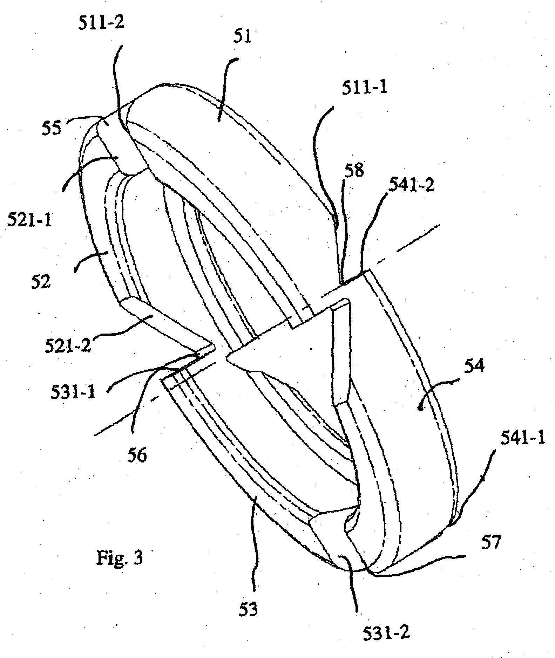

As explained below, in Figures 3 through 5, the annular element 5 does not serve only to indicate [proper] crimping, but the annular element 5 is also configured to participate in the crimping by transmitting force and by guiding the compression tool.

Figure 3 shows an annular element or ring 5 that can be used on a press fitting according to another aspect of the present invention.

The ring 5, as shown in Figure 3, has four segments 51, 52, 53, 54 connected by four connecting sections 55, 56, 57, 58. The segment 51 is connected to a segment 52 by the connecting section 55 and is connected to the segment 54 by the connecting section 58. The segments 52 and 53 are connected together by the connecting section 56, and the segments 53 and 54 are connected together by the connecting section 57.

The segments 51, 52, 53, 54 are substantially in the general form of an arc and are configured to bear on the surface of the pipe insertion end 6. Each of the segments 51, 52, 53, 54 has on its ends a guiding zone 511-1, 511-2, 521-1, 521-2, 531-1, 531-2, 541-1, 541-2, respectively, connected to and configured to work with the corresponding guiding zone of the adjacent segment 51, 52, 53, 54.

For example, the segment 51 includes a guiding-zone-forming end 511-2 attached by the connecting section 55 to the guiding-zone-forming end 521-1 of the segment 52. The segment 51 includes another guiding-zone-forming end 511-1 attached by the connecting section 58 to the guiding-zone-forming end 541-2 of the segment 54. The segment 52 also includes a guiding-zone-forming end 521-2 attached by the connecting section 56 to the guiding-zone-forming end 531-1 of the segment 53. Segment 53 includes another guiding-zone-forming end 531-2 attached by the connecting section 57 to the guiding-zone-forming end 541-1 of the segment 54.

Each guiding-zone-forming end of each segment preferably has a shape that matches the guiding-zone-forming end that it will cooperate with. As shown in Figure 3, the guiding-zone-forming ends are chamfered diagonally to the axial plane of the ring 5.

The connecting sections 55, 56, 57, 58 are configured to deform up to breaking under the ortho-radial shear stress resulting from the pressure applied by the crimping tool. Ortho-radial deformation means deformation is anticipated along an axis which is substantially orthogonal to both the radial and the axial (longitudinal) axes of the press fitting.

The strength of the connecting sections is preferably selected such that breaking occurs only when sufficient pressure, corresponding to the pressure required for proper crimping, has been applied to the ring 5. This is to prevent breaking of the ring before the proper pressure has been reached.

Thus, during crimping, the compression tool is supported by the indicator ring 5, which is slipped over the press sleeve 4, at the pipe insertion end 6. The pressure exerted by the compression tool causes a substantial reduction in the circumference of the indicator ring 5 by ortho-radial deformation of the connecting sections 55, 56, 57, 58 and simultaneous rotational sliding of the guiding-zone-forming ends towards each other.

The connecting sections 55, 56, 57, 58 are subjected to large ortho-radial shear stresses which cause the breaking of the connecting sections and segmentation of the ring 5 into four segments at completion of crimping, thus visually indicating that the crimping was done properly. The ring 5 is configured to break in a controlled manner by rupture of the connecting or interconnecting sections between the constituent segments of the ring.

A person skilled in the art would understand that the segments 51, 52, 53, 54, which rest on the surface of the pipe insertion end 6, are configured to transmit the crimping pressure to the sleeve 4. Additionally, the matching shape of the ends of each segment, connected one to the other, allows to guide the segments and the crimping tool. This advantageously prevents the breaking of segment fragments or connecting sections which could ultimately jam the compression tool or cause random and ineffective deformation of the fitting or of another fitting crimped at a later time.

A person skilled in the art would understand that the ring is shown with four segments. The number of segments is only provided as an example and is not limiting.

The ring 5 is preferably made of plastic. The body of the fitting is preferably made of brass or plastic, whereas the sleeve at each end of the fitting can be made of stainless steel or a similar material.

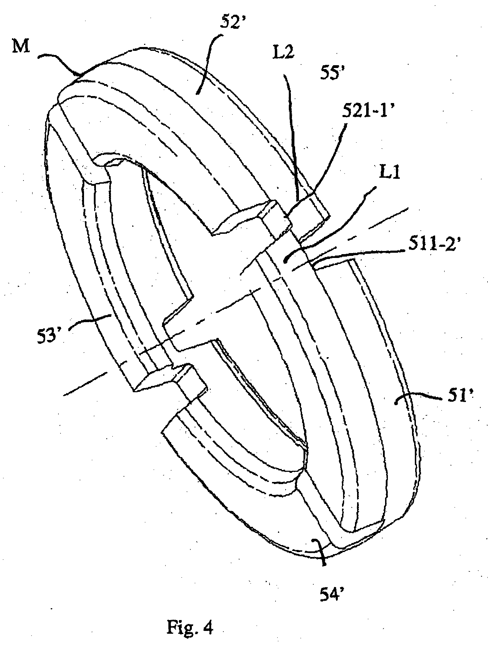

Figure 4 shows a ring 5' usable on a press fitting according to another aspect of the present invention. The ring 5', as shown in Figure 4, has four segments 51', 52', 53', 54' connected by four connecting sections 55', 56', 57', 58'. The segment 51' is connected to the segment 52' by the connecting section 55' and is connected to the segment 54' by the connecting section 58'. The segments 52' and 53' are connected together by the connecting section 56', and the segments 53' and 54' are connected together by connecting section 57'.

Only the connecting section 55', connecting the two segments 51', 52,' is described in the following. A person skilled in the art would understand that the connections between the other segments would be identical to the connection of the segments 51' and 52' described below.

The segment 51' is connected to the segment 52' by the connecting section 55'. The segment 51' includes a guiding-zone-forming end 511-2' connected by the connecting section 55' to the guiding-zone-forming end 521-1' of the segment 52'.

As shown in Figure 4 the guiding-zone-forming ends 511-2' and 521-1' are of matching shape. The end 511-2' has an outer tab L1, with a width of less than half the width of segment 51', that extends around the circumference of the ring, on the pipe-facing side of the ring. The end 521-1" also has an inner tab L2, with a width of less than half the width of segment 52', that extends around the circumference of the ring, on the fitting facing side of the ring. The two tabs L1, L2 are mutually connected by the connecting section 55' which runs along an axis that is substantially perpendicular or oblique with respect to the tabs L1, L2. The two tabs L1, L2 are preferably configured and sized to fit axially, one next to the other, during crimping and after the connecting section 55' is broken, the end 511-2' opposite the tab L2 forming a stop for tab L2, and the end 521-1' opposite the tab L1 forming a stop for the tab L1.

Thus during crimping, the pressure exerted by the compression tool causes a substantial reduction in the circumference of the indicator ring 5', deformation of the connecting section 55' and simultaneous rotational sliding of the tabs L1, L2 towards each other until connecting section 55' breaks and stops on the respective segment ends opposite each tab L1, L2.

It must be noted that the tabs L1, L2 have an axial thickness less than or equal to half the axial thickness of the ring 5', in other words, the corresponding recesses are substantially flush with or exceeding the mid-plane M of the ring. This prevents possible ring expansion due to the material remaining after the connecting section 55' is broken. Of course, the tabs can have various asymmetric axial thicknesses with a differing interconnecting section or differing wider or narrower recesses as long as breaking the interconnecting section results in the tabs sliding over each other.

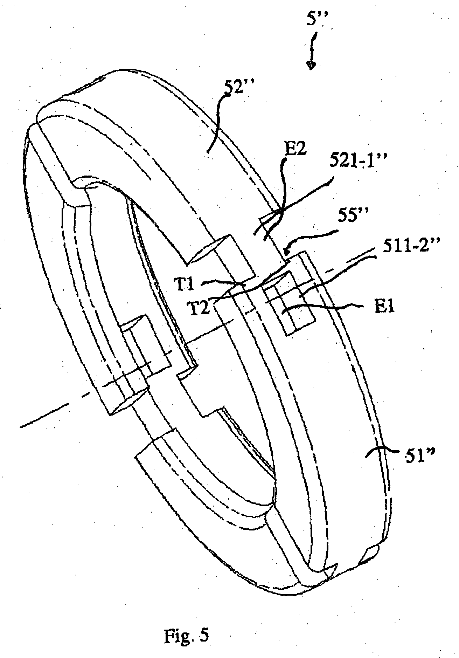

Figure 5 shows, in an axial plane top view, two segments 51", 52" connected to each other by a connecting section 55" of a ring 5" usable on a press fitting according to another aspect of the present invention. Figure 5 shows another example for connecting the ring segments.

The segment 51" is connected to the segment 52" by the connecting section 55'. The segment 51" includes a guiding-zone-forming end 511-2" connected by the connecting section 55" to the guiding-zone-forming end 521-1" of the segment 52".

As shown in Figure 5, the guiding-zone-forming ends 511-2" and 521-1" are of matching shape. The end 521-1" includes the central recess E1, extending along the circumference of the ring. The end 521-1" includes a central tab E2, opposite the recess E1, whose width is substantially smaller than the width of the recess E1. The recess E1 and the tab E2 are connected to each other by the connecting section 55", including the two sections T1, T2 extending along an axis that is substantially perpendicular or oblique to recess E1 and tab E2. The sections T1 and T2 are configured to extend from the circumferential end of the recess E1 substantially to the middle of the tab E2. The tab E2 is preferably shaped and sized to fit into recess E1 during the rotation caused by the pressure exerted on the ring during crimping.

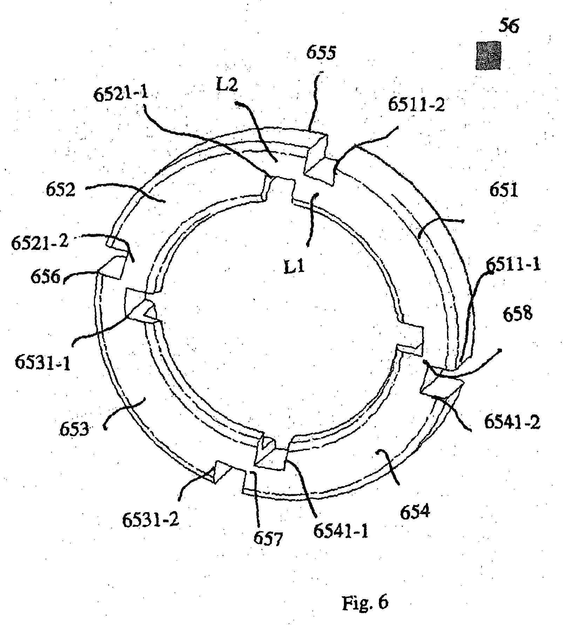

Figure 6 shows another associated ring 5-6 usable on a press fitting according to another aspect of the present invention.

The ring 56, as shown in Figure 6, has four segments 651, 652, 653, 654 connected by four connecting sections 655, 656, 657, 658. The segment 651 is connected to the segment 652 by the connecting section 655 and is connected to the segment 654 by the connecting section 658. The segments 652 and 653 are connected together by the connecting section 656, and the segments 653 and 654 are connected together by the connecting section 657.

The segments are substantially in the general form of an arc and are configured to bear on the surface of the pipe insertion end 6. Each segment 651, 652, 653, 654 has on its ends a guiding zone 6511-1, 6511-2, 6521-1, 6521-2, 6531-1, 6531-2, 6541-1, 6541-2, respectively, connected to and configured to cooperate with the corresponding guiding zone of the adjacent segment 651, 652, 653, 654.

Only the connecting section 655 connecting the two segments 651, 652 is described in the following. A person skilled in the art would understand that the connections between the other segments would be the same as those for the segments 651 and 652.

The segment 651 is connected to the segment 652 by the connecting section 655. The segment 651 includes a guiding-zone-forming end 6511-2 attached by the connecting section 655 to the guiding-zone-forming end 6521-1 of the segment 652.

As shown in Figure 6, the guiding-zone-forming ends 6511-2 and 6521-1 are of matching shape. The end 6511-2 has a lower tab L1, running along the circumference of the ring on the inside perimeter of the ring, its width being less than half the radial thickness of segment 651. The end 6521-1 has an upper tab L2, running along the circumference of the ring on the outside perimeter of the ring, its width being less than half the radial thickness of segment 652.

The two tabs L1, L2 are mutually connected by the connecting section 655. The connecting section 655 runs along a radial axis that is substantially perpendicular or oblique with respect to the tabs L1, L2. The two tabs L1, L2 are preferably shaped and sized to fit when radially overlapping each other along the radial axis during crimping and after the connecting section 655 is broken. The end 6511-2 opposite the tab L2 forms a stop for the tab L2 and the end 6521-1 opposite L1 forms a stop for tab L1.

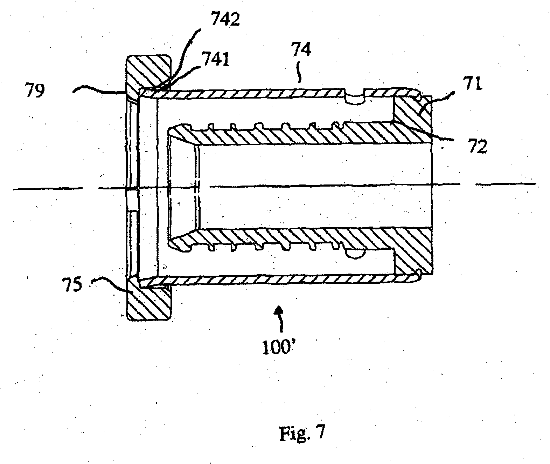

Figure 7 shows a press fitting 100' allowing connection of a pipe 3 according to one aspect of the present invention.

The press fitting 100' includes a fitting body 71 including an inner fitting support 72 and a press sleeve 74 defining an insertion space into which the end of the pipe 3 can be inserted.

The press sleeve 74 extends substantially around the inner fitting support 72 of the fitting body and can be deformed in an irreversible manner, using pressure, to lock the fitting support 72 and the inserted end of the pipe 73. The pressure can be applied by a press jaw or a compression tool (not shown).

The press sleeve74 has at its open pipe-side end 741, also called pipe insertion end 741, a chamfer 742. The chamfer 742 is configured to guide the pipe 3 during insertion of the pipe into the ring 74 and over the inner support 72 of the press fitting 100'.

The chamfer 742 extends substantially around the entire circumference of the pipe insertion end 741, giving the pipe insertion end 741 a form that is substantially flared or "trumpet shaped."

The fitting body 71 has an elongated configuration along the longitudinal axis and can be configured in a way that is substantially symmetric with respect to its longitudinal axis.

A ring 75 is inserted or clipped onto the press sleeve74, in the area of the pipe insertion end 6.

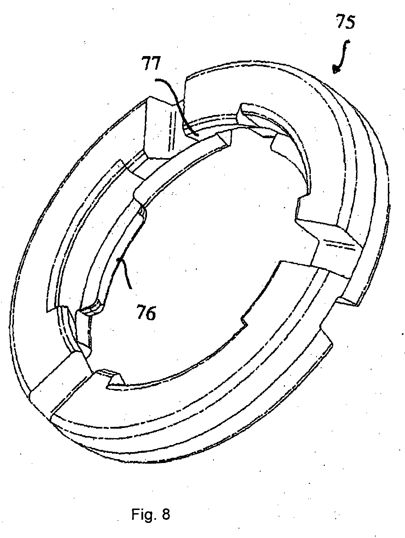

As shown in Figure 8, securing means 76, 77 are provided to ensure that the ring stays on the sleeve, particularly during shipping and handling.

The securing means include inner axial projections 76 and axially external projections 77. The outer axial projections 76 are configured to bear on the axially external end of the chamfer 742, on the pipe insertion side. The inner axial projections 77 are configured to bear on the outer axial end of the chamfer 742, on the pipe fitting side.

It must be noted that the projections 76 and 77 have circumferential angular offset positions, which means there is no axially internal projection aligned with or opposite an axially external projection. This offset configuration prevents damage to the ring when it is being placed on the press sleeve 74.

In an alternative embodiment, the securing means 76, 77 of the ring on the sleeve can also be formed by an axially internal annular projection 76 and an axially external annular projection 77 over the entire circumference of the ring.

The ring 75, as shown in Figures 7 and 8 is placed on the press sleeve74 to partially cover the end area of the sleeve and to have a section 79 of the ring partially protruding past the end area of the sleeve towards the pipe. The protruding section 79 advantageously increases the chamfer zone formed by the sleeve itself. Thus, the insertion of the pipe 3 into the sleeve is facilitated in two ways, both by the protruding section of the ring 75 and by the chamfer 742 of the press sleeve 4.

The inner circumferential surface of the protruding section 79 and the inner circumferential surface of the chamfer zone can be aligned to improve pipe insertion. This particular configuration is not illustrated in Figure 7 wherein the two surfaces are discontinuous.

Otherwise, ring 75 can be pushed onto the sleeve 4 to be flush with the end area of the sleeve.

Even though the rings shown in figures 3-6 each have a particular configuration of segments and guiding zones, it must be noted that a combination of embodiments is possible, for example with a ring including a first configuration of segments and guiding zones according to a first embodiment, and another configuration of segments and guiding zones and even inclined planes according to another embodiment.

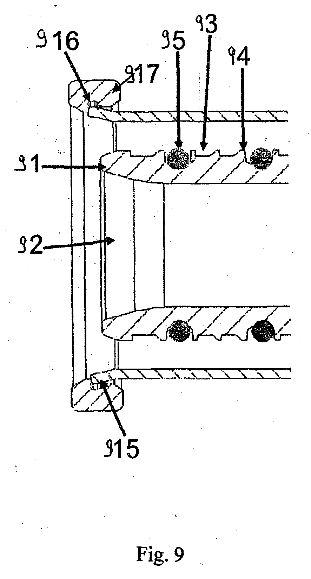

Figure 9 shows a cross sectional view through a base body 91 configured as a press fitting, where the press fitting is designed as a double socket unit and the base body 91 has an insertion end 92 and a fitting support with a pipe-guiding surface 93 with profiling 94 as well as several sealing elements 95 on the pipe-guiding surface 93.

It can also be seen that the press sleeve 910 is coaxially arranged around the pipe-guiding surface 93, thus forming an annular gap 911 between the pipe-guiding surface 93 and the sleeve 910.

At the free end 915 of the press sleeve 910 that is assigned to the insertion end 92, the press fitting shown further comprises a pressing indicator ring 917 that possesses a substantially radially extending groove 916 into which the free end 915 of the press sleeve 910 projects in order to establish a non-positive connection between the pressing indicator ring 917 and the sleeve 910. As can be seen, in order to accomplish this, the free end 915 of the sleeve 910 is widened in comparison with the rest of the sleeve 910. It is again easy to follow how, when the sleeve 910 is pressed, the free end 915 of the sleeve 910 is retracted from the groove 916 of the pressing indicator ring 917 and thus uncovers the pressing indicator ring 917. The pressing indicator ring 917 can furthermore possess a predetermined breaking point along which it is broken as pressing is carried out. If, in the process, the pressing indicator ring 917 is destroyed to the extent that it falls away completely from the fitting, then the lack of the pressing indicator ring 917 is by itself sufficient to demonstrate that the corresponding end of the fitting has been properly pressed.

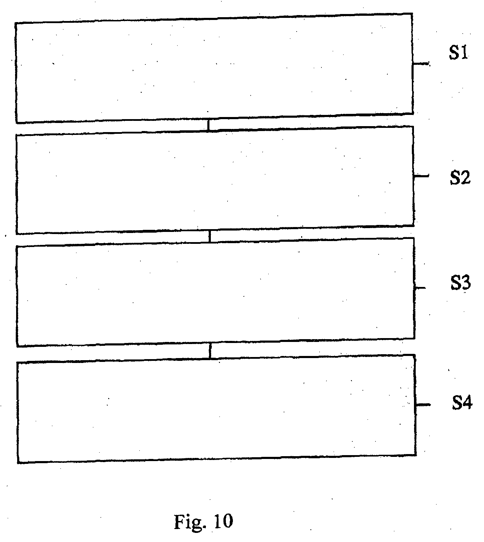

Figure 10 shows various steps of a crimping process according to one aspect of the present invention. The process is shown using a press fitting 1000 described above including a ring 5. Of course, the process could be used with a press fitting and another ring as described in Figures 3 to 9.

In step S1, the pipe 3 is inserted into the press fitting 100 onto the inner support 2.

In step S2, a compression tool is placed over the ring 5 on the pipe insertion side of the open end of the sleeve.

Crimping pressure is applied during step S3 on the ring 5 which transmits the crimping pressure through the segments 51 to 54 to the sleeve 4. The pressure exerted by the compression tool causes a substantial reduction in the circumference of the indicator ring 5 by ortho-radial deformation of the connecting sections 55, 56, 57, 58 and by simultaneous rotational sliding of the guiding-zone-forming ends of segments 51 to 54 towards each other, thus maintaining the alignment of the compression tool and/or the segments inside the tool.

In step S4, the connecting sections 55, 56, 57, 58, which are subjected to large ortho-radial shear stresses, break, which results in the segmentation of the ring 5 into four segments 51, 52, 53, 54 and guides the compression tool when crimping is nearing completion.

Advantageously, the breaking of the ring 5 thus visually indicates that the crimping was done properly, and the guiding-zone-forming ends of the ring segments help guide the ring segments towards each other, and guide the crimping tool.

In summary, the invention provides a press fitting with a sleeve equipped with a breakable ring that is clipped to the end of each sleeve, and a crimping process for such a press fitting.

The ring is configured to visually indicate that the crimping was done properly as well as to transmit crimping forces. The ring can also guide the crimping or compression tool during the crimping operation. Furthermore, the ring fully participates in the crimping operation. The ring is located at the pipe insertion end of the sleeve, not at the middle of the press fitting. This advantageously assures a good fit between the sleeve and the pipe, preventing buckling at the pipe insertion end of the sleeve, which also improves the visual appearance of the crimped fittings.

## Claims

1. Press fitting (100, 100"), including:
a press sleeve (4) provided with a deformable breakable annular element (5) at a pipe side edge (6); and
a fitting body with a fitting support (2) over which a pipe end (3) can be inserted, wherein the press sleeve (4), which surrounds the fitting support, is configured to be deformed by crimping pressure applied by a compression tool to attach the pipe end (3) to the fitting support (2), wherein said annular element (5) is located on the press sleeve, at an open end of the press sleeve, wherein the annular element (5) is configured to interact with a compression tool in order to guide the compression tool, and wherein the annular element (5) is configured to be broken or remain permanently deformed by the action of a compression tool, wherein the annular element (5) is configured to transmit the crimping pressure to the press sleeve (4), and the annular element (5) is configured to transmit forces that are acting on the annular element in the area of the pipe-side edge (6) during the time that the compression tool is applied to the compression sleeve, **characterized in that** the annular element (5) has a plurality of segments (51, 52, 53, 54) connected by a plurality of connecting sections (55, 56, 57, 58), the annular element being configured to have a substantial reduction in circumference when crimping pressure is applied, through ortho-radial deformation of the connecting sections and simultaneous sliding of the segments towards each other.

2. Press fitting according to Claim 1, wherein the annular element (5) can be configured to transmit the crimping pressure to the compression sleeve, while serving as a guide during crimping, wherein the annular element (5) is configured to guide the compression tool in such a way that the edges of the compression tool and of the press sleeve are in alignment, and/or are or remain at least partially visible during at least the greater part of the time that the compression tool is being applied.

3. Press fitting according to any one of claims 1 to 2, wherein the annular element (5) is provided and intended, as a result of the action of a compression tool, to undergo a reduction in the radius of curvature, and/or the annular element possesses sectors having a radius of curvature that is less than the radius of curvature of the press sleeve prior to deformation and that corresponds in particular substantially to the radius of curvature of the adjacent section of pipe.

4. Press fitting according to any one of claims 1 to 3, wherein the annular element (5) is designed with a chamfer on the compression tool side and/or on the pipe side, in particular wherein the open end (41) of the sleeve comprises a chamfer (42) to guide the insertion of the pipe end.

5. Press fitting according to any one of claims 1 to 4, wherein at least half, preferably more than two thirds, and in particular preferably at least 90%, of the peripheral inner surface of the annular element (5) is in contact with the pipe-side edge (6) of the press sleeve prior to deformation, in particular the ring (5) is flush with the open end of the crimp sleeve.

6. Press fitting according to any one of claims 1 to 5, wherein the annular element (5) is prevented from moving axially.

7. Press fitting according to any one of claims 1 to 6, wherein each segment (51, 52, 53, 54) has a guiding zone (511-1, 511-2, 521-1, 521-2, 531-1, 531-2, 541-1, 541-2) at its ends, each guiding-zone-forming end being connected to and configured to cooperate with the guid-ing-zone-forming end of the adjacent segment.

8. Press fitting according to claim 7, wherein each guiding-zone-forming end substantially corresponds in shape to the guiding-zone-forming end to which it is connected.

9. Press fitting according to claim 7, wherein the shape of each guiding-zone-forming end substantially matches the guiding-zone-forming end to which it is connected such that the two connected ends fit into each other during crimping.

10. Fitting according to any one of claims 1 to 6, wherein the connecting sections (55, 56, 57, 58) are configured to break when a sufficient crimping pressure has been applied.

11. Fitting according to any of the claims 1 to 10, wherein the annular element (75) is inserted into the open end of the compression sleeve, and wherein the annular element has a protruding section (79) protruding from the open end of the press sleeve towards the pipe.

12. Fitting according to claim 11, the protruding section (79) forming a chamfer to guide the insertion of the pipe end.

13. Use of a press fitting according to any of claims 1 to 12, wherein a compression tool is guided to an open end of a press sleeve using a deformable, breakable annular element which is located at the open end of the compression sleeve, the annular element being configured to transmit the crimping pressure to the compression sleeve.

14. A crimping process including the application of crimping pressure by a compression tool on a deformable breakable annular element at the open end of a press fitting according to anyone of claims 1 to 12, the annular element segments and/or the compression tool remaining guided when the annular element breaks under the force of the compression pressure while applying a deforming force on the sleeve through and at the annular element.

## Patentansprüche

1. Pressfitting (100, 100"), enthaltend:
eine Presshülse (4), bereitgestellt mit einem verformbaren, bruchfähigen ringförmigen Element (5) an einer rohrseitigen Kante (6); und
einen Fittingkörper mit einer Fittingstütze (2), über welche ein Rohrende (3) eingeführt werden kann, wobei die Presshülse (4), welche die Fittingstütze umgibt ausgestaltet ist um verformt zu werden durch Crimpdruck, bewirkt durch ein Kompressionswerkzeug zum Befestigen des Rohrendes (3) an der Fittingstütze (2), wobei das ringförmige Element (5) befindlich ist an der Presshülse, bei einem offenen Ende der Presshülse, wobei das ringförmige Element (5) ausgestaltet ist zur Wechselwirkung mit einem Kompressionswerkzeug zum Führen des Kompressionswerkzeuges, und wobei das ringförmige Element (5) ausgestaltet ist gebrochen zu werden/sein oder permanent verformt zu bleiben durch die Wirkung des Kompressionswerkzeuges, wobei das ringförmige Element (5) ausgestaltet ist zum Übertragen des Crimpdruckes auf die Presshülse (4) und das ringförmige Element (5) ausgestaltet ist zum Übertragen von Kräften, die auf das ringförmige Element in dem Bereich der rohrseitigen Kante (6) während der Zeit wirken, in der das Kompressionswerkzeug auf die Presshülse wirkt, **dadurch gekennzeichnet, dass** das ringförmige Element (5) über eine Vielzahl von Segmenten (51, 52, 53, 54) verfügt, verbunden mittels einer Vielzahl von Verbindabschnitten (55, 56, 57, 58), wobei das ringförmige Element ausgestaltet ist um einer wesentlichen Umfangsreduzierung zu unterliegen, wenn Crimpdruck bewirkt ist/wird, und zwar vermittels orthoradialer Verformung der Verbindabschnitte und gleichzeitigem Gleiten der Segmente hin zueinander.

2. Pressfitting nach Anspruch 1, bei welchem das ringförmige Element (5) ausgestaltet sein/werden kann zur Übertragung des Crimpdruckes an die Press- oder Kompressionshülse während es als Führung während dem Crimpen dient, wobei das ringförmige Element (5) ausgestaltet ist zum Führen des Kompressionswerkzeuges in solch einer Weise, das die Kanten des Kompressionswerkzeuges und der Presshülse ausgerichtet sind/werden, und/oder zumindest teilweise sichtbar sind oder verbleiben während zumindest dem größeren Part der Zeit in der das Kompressionswerkzeug angewendet ist/wird.

3. Pressfitting nach einem der Ansprüche 1 bis 2, bei welchem das ringförmige Element (5) bereitgestellt und beabsichtigt ist um als Ergebnis der Wirkung eines Kompressionswerkzeuges einer Reduzierung in dem Krümmungsradius zu unterliegen, und/oder bei welchem das ringförmige Element über Sektoren verfügt mit einem Krümmungsradius, welcher geringer ist als der Krümmungsradius der Presshülse vor Verformung und insbesondere im Wesentlichen dem Krümmungsradius des benachbarten Abschnittes des Rohres entsprechend.

4. Pressfitting nach einem der Ansprüche 1 bis 3, bei welchem das ringförmige Element (5) ausgelegt ist mit einer Phase an der Kompressionswerkzeugseite und/oder an der Rohrseite, insbesondere umfasst das offene Ende (41) der Hülse eine Phase (42) zum Führen der Einsetzung/Einführung des Rohrendes.

5. Pressfitting nach einem der Ansprüche 1 bis 4, bei welchem vor Verformung zumindest die Hälfte, bevorzugt mehr als zwei Drittel und insbesondere bevorzugt zumindest 90% der peripheren Innenfläche des ringförmigen Elementes (5) in Berührung ist/gelangt mit der rohrseitigen Kante (6) des Presshülse, insbesondere ist der Ring (5) fluchtend mit dem offenen Ende der Crimphülse.

6. Pressfitting nach einem der Ansprüche 1 bis 5, bei welchem das ringförmige Element (5) von axialer Bewegung abgehalten ist/wird.

7. Pressfitting nach einem der Ansprüche 1 bis 6, bei welchem jedes Segment (51, 52, 53, 54) über eine Führungszone (511-1, 511-2, 521-1, 521-2, 531-1, 531-2, 541-1, 541-2) an dessen Enden verfügt, wobei jedes führungszonebildende Ende verbunden mit und ausgestaltet ist/wird zur Wechselwirkung mit dem führungszonebildenden Ende des benachbarten Segmentes.

8. Pressfitting nach Anspruch 7, bei welchem jedes führungszonebildende Ende im Wesentlichen formentsprechend ist bezüglich dem führungszonebildenden Ende bezüglich welchem es verbunden oder angeschlossen ist/wird.

9. Pressfitting nach Anspruch 7, bei welchem die Form von jedem führungszonebildenden Ende im Wesentlichen passt zu dem führungszonebildenden Ende bezüglich welchem es verbunden oder angeschlossen ist/wir, derart, dass zwei verbundene/angeschlossene Enden ineinander passen während dem Crimpen.

10. Fitting nach einem der Ansprüche 1 bis 6, bei welchem die Verbindabschnitte (55, 56, 57, 58) ausgestaltet sind/werden zum Brechen wenn ein ausreichender Crimpdruck bewirkt worden ist/wurde.

11. Fitting nach einem der Ansprüche 1 bis 10, bei welchem das ringförmige Element (75) eingeführt ist/wird in das offene Ende der Kompressionshülse, und bei welchem das ringförmige Element über einen vorspringenden Abschnitt (79) verfügt, vorspringend von dem offenen Ende der Presshülse hin zu dem Rohr.

12. Fitting nach Anspruch 11, wobei der vorspringende Abschnitt (79) eine Phase zum Führen des Einsetzens oder Einführens des Rohrendes bildet.

13. Verwendung eines Pressfitting gemäß einem der Ansprüche 1 bis 12, bei welcher ein Kompressionswerkzeug geführt ist/wird bezüglich einem offenen Ende einer Presshülse unter Verwendung eines verformbaren brechbaren oder bruchfähigen ringförmigen Elementes, welches befindlich ist an dem offenen Ende der Kompressionshülse, wobei das ringförmige Element ausgestaltet ist zum Übertragen des Crimpdruckes auf die Kompressionshülse.

14. Crimpverfahren, beinhaltend die Anwendung von Crimpdruck durch ein Kompressionswerkzeug an einem verformbaren brechbaren oder bruchfähigen ringförmigen Element an dem offenen Ende eines Pressfittings gemäß einem der Ansprüche 1 bis 12, wobei die Segmente des ringförmigen Elements und/oder das Kompressionswerkzeug geführt werden/bleiben wenn das ringförmige Element unter der Kraft des Kompressionsdruckes bricht, während der Bewirkung einer Verformungskraft an der Hülse durch und bei dem ringförmigen Element.

## Revendications

1. Raccord à sertir (100, 100"), comprenant:
une douille de sertissage (4) fournie avec un élément annulaire (5) déformable, sécable, au niveau d'un bord côté tube (6) ; et
un corps de raccord, avec un support de raccord (2) sur lequel une extrémité de tube (3) peut être insérée, dans lequel la douille de sertissage (4), qui entoure le support de raccord, est configurée pour être déformée par pression de sertissage appliquée par un outil de compression, afin de fixer l'extrémité de tube (3) au support de raccord (2),
dans lequel l'élément annulaire (5) est situé sur la douille de sertissage, à une extrémité ouverte de la douille de sertissage, dans lequel l'élément annulaire (5) est configuré pour interagir avec un outil de compression afin de guider l'outil de compression, et dans lequel l'élément annulaire (5) est configuré pour être cassé ou pour rester déformé de manière permanente par l'action d'un outil de compression,
dans lequel l'élément annulaire (5) est configuré pour transmettre la pression de sertissage à la douille de sertissage (4), et l'élément annulaire (5) est configuré pour transmettre des forces qui agissent sur l'élément annulaire dans la zone de bord côté tube (6) pendant la durée pendant laquelle l'outil de compression est appliqué sur la douille de sertissage, **caractérisé en ce que**
l'élément annulaire (5) a une pluralité de segments (51, 52, 53, 54) reliés par une pluralité de tronçons de connexion (55, 56, 57, 58), l'élément annulaire étant configuré pour une réduction sensible de sa circonférence lors de l'application de la pression de sertissage, par déformation ortho-radiale des tronçons de connexion et glissement simultané des segments les uns vers les autres.

2. Raccord à sertir selon la revendication 1, dans lequel l'élément annulaire (5) peut être configuré pour transmettre la pression de sertissage à la douille de sertissage, tout en servant de guide pendant le sertissage, dans lequel l'élément annulaire (5) est configuré pour guider l'outil de compression de sorte que les bords de l'outil de compression et de la douille de sertissage sont alignés, et/ou sont ou restent au moins partiellement visibles pendant au moins la majeure partie du temps pendant lequel l'outil de compression est appliqué.

3. Raccord à sertir selon l'une quelconque des revendications 1 à 2, dans lequel l'élément annulaire (5) est fourni et prévu pour subir une réduction du rayon de courbure, en tant que résultat de l'action de l'outil de compression, et/ou l'élément annulaire possède des sections ayant un rayon de courbure qui est inférieur au rayon de courbure de la douille de sertissage avant déformation et qui correspond en particulier sensiblement au rayon de courbure de la section adjacente de tube.

4. Raccord à sertir selon l'une quelconque des revendications 1 à 3, dans lequel l'élément annulaire (5) est conçu avec un chanfrein du côté de l'outil de compression et/ou du côté du tube, en particulier dans lequel l'extrémité ouverte (41) de la douille comprend un chanfrein (42) pour guider l'insertion de l'extrémité de tube.

5. Raccord à sertir selon l'une quelconque des revendications 1 à 4, dans lequel au moins la moitié, de préférence plus des deux tiers, et en particulier de préférence au moins 90%, de la surface interne périphérique de l'élément annulaire (5) est en contact avec le bord côté tube (6) de la douille de sertissage avant déformation, en particulier la bague (5) affleure au niveau de l'extrémité ouverte de la douille de sertissage.

6. Raccord à sertir selon l'une quelconque des revendications 1 à 5, dans lequel l'élément annulaire (5) est empêché de se déplacer axialement.

7. Raccord à sertir selon l'une quelconque des revendications 1 à 6, dans lequel chaque segment (51, 52, 53, 54) a une zone de guidage (511-1, 511-2, 521-1, 521-2, 531-1, 531-2, 541-1, 541-2), à ses extrémités, chaque extrémité formant zone de guidage étant reliée à et configurée pour coopérer avec l'extrémité formant zone de guidage du segment voisin.

8. Raccord à sertir selon la revendication 7, dans lequel chaque extrémité formant zone de guidage est sensiblement en correspondance de forme avec l'extrémité formant zone de guidage à laquelle elle est reliée.

9. Raccord à sertir selon la revendication 7, dans lequel la forme de chaque extrémité formant zone de guidage correspond sensiblement à l'extrémité formant zone de guidage à laquelle elle est reliée, de sorte que deux extrémités reliées s'emboitent l'une dans l'autre lors du sertissage.

10. Raccord à sertir selon l'une quelconque des revendications 1 à 6, dans lequel les tronçons de connexion (55, 56, 57, 58) sont configurés pour casser lorsqu'une pression de sertissage suffisante a été appliquée.

11. Raccord à sertir selon l'une quelconque des revendications 1 à 10, dans lequel l'élément annulaire (5) est inséré sur l'extrémité ouverte de la douille de sertissage, et dans lequel l'élément annulaire a une section en saillie (79) projetant depuis l'extrémité ouverte de la douille de sertissage vers le tube.

12. Raccord à sertir selon la revendication 11, la section en saillie (79) formant un chanfrein pour guider l'insertion de l'extrémité de tube.

13. Utilisation d'un raccord à sertir selon l'une des revendications 1 à 12, dans laquelle un outil de compression est guidé au niveau d'une extrémité ouverte d'une douille de sertissage en utilisant un élément annulaire déformable, sécable, situé au niveau de l'extrémité ouverte de la douille de sertissage, l'élément annulaire étant configuré pour transmettre la pression de sertissage à la douille de sertissage.

14. Procédé de sertissage comprenant l'application, par un outil de compression, d'une pression de sertissage, sur un élément annulaire déformable, sécable, au niveau d'une extrémité libre d'une douille de sertissage d'un raccord à sertir selon l'une quelconque des revendications 1 à 12, des segments d'éléments annulaires et/ou l'outil de compression etant/restant guidés lorsque l'élément annulaire se casse sous la force de la pression de sertissage tout en appliquant une force de déformation sur la douille à travers et au niveau de l'élément annulaire.
